# EUROPEAN PATENT SPECIFICATION

(11) **EP 3 040 809 B1**
(45) Date of publication and mention of the grant of the patent: **12.12.2018**
(21) Application number: 15150039.4
(22) Date of filing: 02.01.2015
(51) Int. Cl.: G06F 3/01, G06F 3/0481, G06F 3/14, B60K 35/00, B60K 37/00

(54) **Method and system for controlling a human-machine interface having at least two displays**
Verfahren und System zur Steuerung einer Mensch-Maschine-Schnittstelle mit mindestens zwei Anzeigen
Procédé et système pour commander une interface homme-machine ayant au moins deux afficheurs

(43) Date of publication of application: 06.07.2016
(73) Proprietor: Harman Becker Automotive Systems GmbH, 76307 Karlsbad (DE)
(72) Inventor: Roth, Hans, 76187 Karlsruhe (DE); Reifenrath, Christoph, 50374 Erftstadt (DE)
(74) Representative: Westphal, Mussgnug & Partner Patentanwälte mbB

(56) References cited:
- WO-A1-2013/043228
- US-A1- 2012 169 582
- US-A1- 2012 300 061
- US-A1- 2014 348 389

## Description

### TECHNICAL FIELD

The present disclosure relates generally to a display system in a vehicle. In particular, the disclosure is directed to an adaptive display system including at least two displays and a method for controlling a visual output of the at least two displays based on a gaze tracking of a vehicle driver.

### BACKGROUND

Eye-tracking devices detect the position and movement of an eye. Several varieties of eye-tracking devices are known. Currently, eye tracking devices and methods are implemented in vehicles to detect drowsiness and erratic behavior in a driver of a vehicle, as well as enable hands-free control of certain vehicle systems. However, drivers are frequently required to make use of display components (e.g. heads-up display, dashboard display, and center stack display) to obtain visual information about the vehicle environment in order to conduct a range of critical tasks (navigation, monitoring speed and fuel level, entertainment system control, etc.). The limited viewable area of each display and the distances between various displays generally requires too much of the driver's attention, particularly in critical driving situations.

Document US 2014/0348389 A1 discloses systems, methods, and apparatus for controlling devices based on a detected gaze. A method is provided for executing computer executable instructions by one or more processors for controlling one or more devices attached to a vehicle based at least in part on a detected direction of observation of an occupant of the vehicle. The method further includes receiving one or more images from at least one camera attached to the vehicle, locating, from the one or more images, one or more body features associated with the occupant, determining a direction of gaze from the one or more located body features, and controlling the one or more devices based at least in part on the direction of gaze.

Document US 2012/0169582 A1 discloses a system and method for activating a visual control interface, and in particular, for activating a visual control interface using an eye tracking system in a vehicle. A switch is used to activate and deactivate a control section of an eye tracking system in a human-machine interaction control system. The system allows a driver (or operator) of a vehicle to signal the system with selection of the switch to activate or deactivate the control section, thereby providing functional support to the driver when desired, but remaining inconspicuous otherwise.

Document US 2012/0300061 A1 discloses methods, devices and computer programs for controlling behavior of an electronic device. A method includes an operation for operating the electronic device in a first mode of operation, and an operation for tracking the gaze of a user interfacing with the electronic device. The electronic device is maintained in a first mode of operation as long as the gaze is directed towards a predetermined target. In another operation, when the gaze is not detected to be directed towards the predetermined target, the electronic device is operated ina second mode of operation, which is different from the first mode of operation.

It would be desirable to provide an adaptive display system wherein at least one display of a multiplicity of displays is automatically configured based upon a vision characteristic of a user to maximize a viewable area of a display component without the requirement of manual manipulation.

### SUMMARY

A method for controlling a human machine interface disposed in a vehicle and having at least two displays, includes monitoring a gaze direction of a vehicle driver. Based on the monitoring, it is determined which of the at least two displays is closest to the gaze direction of the vehicle driver, and in response to the determining, a functionality of the closest of the at least two displays is automatically altered. Altering the functionality of the closest of the at least two displays is disabled unless at least one of the following occurrences is detected: the gaze direction of the vehicle driver is maintained for at least a predefined amount of time, wherein the predefined amount of time is based on the vehicle speed, a warning signal is issued by a driver assistant system or a vehicle control system.

A system for controlling a human machine interface disposed in a vehicle and having at least two displays, includes a gaze-tracking device operatively disposed in a vehicle and configured to monitor a gaze direction of a vehicle driver while the vehicle is in operation. The system further includes a processor operatively associated with the gaze-tracking device and the at least two displays, the processor being configured to, based on the monitoring, determine which of the at least two displays is closest to the gaze direction of the vehicle driver, and being configured to, in response to the determining, automatically alter a functionality of the closest of the at least two displays. Altering the functionality of the closest of the at least two displays is disabled unless at least one of the following occurrences is detected: the gaze direction of the vehicle driver is maintained for at least a predefined amount of time, wherein the predefined amount of time is based on the vehicle speed, a warning signal is issued by a driver assistant system or a vehicle control system.

Other systems, methods, features and advantages will be or will become apparent to one with skill in the art upon examination of the following detailed description and figures. It is intended that all such additional systems, methods, features and advantages be included within this description, be within the scope of the invention and be protected by the following claims.

### BRIEF DESCRIPTION OF THE DRAWINGS

The method and system may be better understood with reference to the following description and drawings. The components in the figures are not necessarily to scale, emphasis instead being placed upon illustrating the principles of the invention. Moreover, in the figures, like referenced numerals designate corresponding parts throughout the different views.
Figure 1 is a schematic diagram illustrating an example of a vehicle interior with three in-vehicle displays and a vehicle driver with his eyes focused beyond the displays.
Figure 2 is a topview diagram depicting an example of a system for monitoring the gaze direction of a vehicle driver applicable in the interior shown in Figure 1.
Figure 3 is a lateral view diagram depicting an example of a system for monitoring the gaze direction of a vehicle driver applicable in the interior shown in Figure 1.
Figure 4 is a schematic diagram illustrating the closest display before and after a warning signal occurs.
Figure 5 is a schematic diagram illustrating the closest display before and after exceeding a speed threshold.
Figure 6 is a schematic diagram illustrating the closest display before and after exceeding a time threshold.
Figure 7 is a block diagram illustrating a system or controlling a human machine interface having three displays.
Figure 8 is a flow chart illustrating a method for controlling a human machine interface having three displays.

### DETAILED DESCRIPTION

Examples of the method and system disclosed herein may employ monitoring a vehicle driver while he/she is operating a vehicle. This may be accomplished by utilizing a tracking device, which is operatively disposed inside the interior of the driver's vehicle. The tracking device determines an eye and/or facial position of the vehicle driver while he/she is driving. The eye and/or facial position is used to determine, for example, when the vehicle driver's eyes are, or face is focused on a particular object disposed inside the vehicle interior. If the driver's eyes are and/or face is found to be focusing on or close to an in-vehicle display, the functionality of that display may be automatically altered until the driver re-focuses his/her eyes/face back on the road.

As used herein, the term "vehicle driver" or "driver" refers to any person that is operating a mobile vehicle. It is to be understood that when the vehicle driver is "operating a vehicle", the vehicle driver is controlling one or more operational functions of the vehicle. For example, the vehicle driver is considered to be "operating a vehicle" when the driver is physically steering the vehicle and/or controlling the gas and brake pedals while the transmission system is in a mode other than a park mode (e.g., a drive mode, a reverse mode, a neutral mode, etc.). Additionally, when the vehicle is "in operation", the vehicle is powered on and one or more operational functions of the vehicle are being controlled by a vehicle driver.

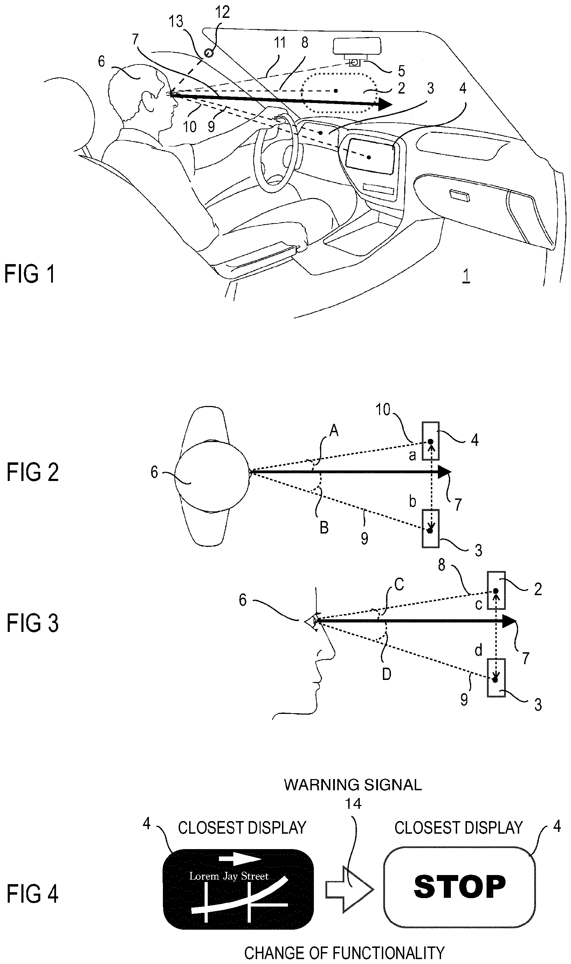

Examples of the method and system for controlling a human machine interface having at least two displays will now be described in conjunction with the figures. These examples are described herein below, when an exemplary vehicle 1 is in operation utilizing three displays 2-4 disposed inside the vehicle interior whose functionality may be altered, and a gaze-tracking device that may include an eye-tracking device and/or a face tracking device with a camera 5 and an optional additional camera 12 also disposed inside the vehicle interior. In these examples, camera 5 of the gaze-tracking device is attached to the rearview mirror, and camera 12 may be disposed in the left A-pillar of vehicle 1, as shown in Figure 1. Instead of a camera any type of optical sensor or imaging system appropriate for tracking the eye or face may be used. The displays 2-4 may be part of any human-machine interface (HMI) disposed within the vehicle 1. Examples of the displays 2-4 include a Vacuum Fluorescent Display (VFD), an Light Emitting Diode (LED) display, a thin-film transistor (TFT) display, a driver information center display, a radio display, an arbitrary text device, a heads-up display (HUD), an Liquid Crystal Diode (LCD) display, and/or the like. In the example shown in Figure 1, one display 2 is a heads-up display formed by a section of the windshield in front of a driver 6 onto which images are projected by a projector (not shown). Another display 3 is disposed in the dashboard in front of the driver 6, and still another display 4 is disposed in the center console. In the exemplary situation depicted in Figure 1, the driver 6 looks through the windshield in a gaze direction 7 which does not intersect with any of the displays 2-4. The dotted line arrows 8-10 pointing from the driver's eyes to the displays 2-4 indicate the direction in which the driver's eyes are pointing. The portion of the dotted line arrows from the cameras 5 and 12 to the driver's eyes illustrates the respective line-of-sight between the cameras 5 and 12, respectively, and the driver's eyes. Gaze directions along lines 8-10 represent situations in which the driver 6 looks at one of the displays 2-4. The cameras 5 and 12 are each in line-of-sight 11 and 13, respectively, with the driver's eyes.

The displays 2-4 may, in some instances, be operated in connection with an audio component (not shown in Figure 1), or may be independent of the audio component. The displays 2-4 may be in communication with a head unit (not shown in Figure 1) that includes at least one internal processor such as, e.g., a micro-controller, a controller, a micro-processor, a signal processor or the like. The at least one processor may include an application (e.g., computer program code encoded on a computer readable medium) for automatically altering the functionality of each of the displays 2-4 in response to receiving an indication from, for example, the gaze-tracking device that the vehicle driver's focus is directed roughly toward one of the displays 2-4. However, the wider area around and the location of the displays, windscreen and rear- and side mirrors may be also determined as target areas. In an example, the at least one processor initiates directly or dependent on further conditions the automatic altering of the functionality of the closest display as soon as a signal (to do so) is received from the gaze-tracking device.

As shown in Figures 2 and 3, the closest display may be detected by comparing the actual gaze-direction 7 with the gaze directions 8-10 that would apply if the driver 6 looks at one of the displays 2-4. Additionally or alternatively, the gaze tracking system may determine any other of the target area(s) the driver is looking at as a basis to alter the functionality of the closest display. The distance between the actual gaze direction 7 and the gaze directions 8-10 when looking at the displays 2-4 may be expressed as angle measures A-D, as parts a-d of the direct route from one display to another, by way of a two-dimensional or three-dimensional coordinate system (not shown), or any other appropriate way. Referring to Figure 2, which is a top view of the situation shown in Figure 1, the horizontal line between, e.g., displays 3 and 4 is cut into two parts a and b by gaze direction 7. As the distance between displays 3 and 4 is essentially constant and known, the parts a and b can be calculated. Alternatively, the parts A and B of the angle measure can be determined in that the angle measure between lines 9 and 10 representing the gaze directions from the driver 6 to the displays 3 and 4, which is essentially constant and known, is split in two parts A and B by actual gaze direction 7. Referring to Figure 3, which is a lateral view of the situation shown in Figure 1, the vertical line between, e.g., displays 2 and 3 is cut in two parts c and d by gaze direction 7. As the distance between displays 2 and 3 is essentially constant and known, the parts c and d can be calculated. Alternatively, the parts C and D of the angle measure can be determined in that the angle measure between lines 8 and 9 representing the gaze directions from the driver 6 to the displays 2 and 3, which is essentially constant and known, is split in two parts C and D by actual gaze direction 7. From parts A-D or a-d, respectively, the display closest to the actual gaze direction 7 can be identified using standard geometry.

Dependent on the detected gaze direction the functionality of the closest display (in contrast to the other displays) may be altered via multiple different mechanism as for example: i) In a first exemplary mechanism, all displays are switched off, deactivated or in a power saving mode at one time except the closest display which is active, switched on or in a power mode. The content displayed may be independent from the actual gaze direction, which means each display shows its usual content if selected as closest display. Alternatively, the content may be altered as in the mechanism described below. ii) In a second exemplary mechanism, all displays are active, but only the content displayed on the closest display is altered. For example, a summary of the most important driver information is displayed on the closest display instead of or additionally to its usual content. iii) In a third exemplary mechanism, which may be used in connection with mechanisms i) and ii), the functionality is altered only in case of, and maybe according to, a detected specific or exceptional situation such as the occurrence of a warning signal, exceeding a vehicle speed limit, or exceeding a certain time limit.

The functionality of the closest display that may be altered includes the function that displays content on the display screen. For instance, how the content is displayed on the display screen may be altered. In one example, if a navigation route is displayed on the display screen when it is determined that the driver's eyes are or face is focused on the closest display, the processor may execute a program/application that blacks out the screen (so that the navigation route is not viewable at all) or simplifies the navigation route content (such as the navigational map) so that only pertinent information that is immediately required (such as, e.g., the next turn instruction) is illustrated at the time of altering. Other functions of the closest display that may be altered include the number of command button choices available to the vehicle driver (e.g., limiting the command options to those pertaining to the application then-currently being run on the display), the amount of text shown on the display per item displayed (e.g., the navigational map may be displayed in a simplified form such that only an impending maneuver is shown), the amount of pictures and/or graphics shown on the display (e.g., all pictures and/or graphics may be removed), the font size of the displayed text (e.g., all of the content would still be shown on the display, but pertinent and/or urgent information may be illustrated with an increased font size), and/or the contrast ratio between pertinent/urgent text and the background palette of the display (e.g., the background palette may be faded slightly so that the text stands out). Another functionality that may be altered includes the power consumption and the brightness of the closest display.

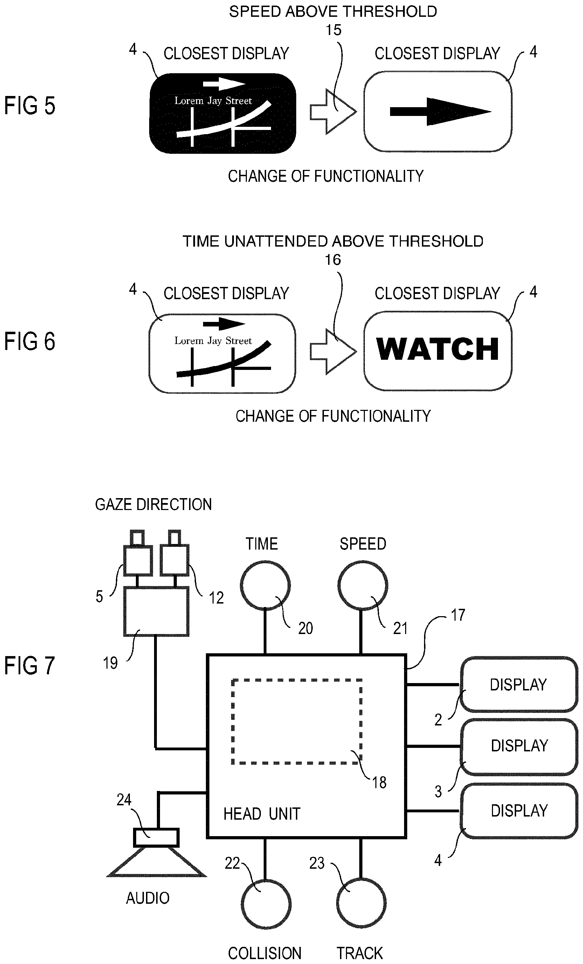

Referring to Figure 4, the closest display, e.g., display 4, may display a navigation route in a so-called (low-power) night mode, in which the background of the image displayed is mainly dark and the text and graphics are bright, when a warning signal 14 such as a collision warning, a lane departure warning, a driver inattentiveness warning, or any other driver assistance message is issued. Then, the content of display 4 is altered to a short message, e.g., "STOP", which is presented in a (high-power) day mode (dark letters on bright background). The font size of the displayed text is increased and no disturbing graphics are displayed. Although not shown, the color may be changed into red, for instance, to highlight the warning nature of the message. Referring to Figure 5, the closest display, again display 4, may display the same navigation route in the same way as shown in Figure 4, when a signal 15 is issued that indicates that the vehicle speed is higher than a given threshold. Then, the content of display 4 is altered to a simpler illustration, e.g., only an arrow instead of the more complex illustration that was displayed, and is presented in the day mode (dark graphics on bright background). The size of the displayed graphics is increased and no further disturbing graphic elements are displayed.

Furthermore, if the system determines that the driver is not looking at the target area on the lane or street or through the HUD, the warning parameters for collision warning or lane departure warning may be altered, so that the driver is informed earlier about a hazardous situation. If the lane detection sensor or other sensors, e.g. turn-signal switch, detect the beginning of a lane change, then the system may verify whether the driver's eyes are gazing into the area of the (side) rear-view mirror(s). If driver is not gazing at the (side) rear-view mirror(s) for a determined time, the system provides an audible and/or optical warning at the closest display to remind the driver to look into the mirror prior to changing a lane.

Referring to Figure 6, the closest display, again display 4, may display the same navigation route as shown in Figure 4 but now in day mode, when a signal 16 is issued that indicates that the driver is gazing at the display for a time period that extends beyond a given threshold. Then, the content of display 4 is altered to a shorter message, e.g., "WATCH", which is presented in the day mode (dark letters on bright background). The font size of the displayed text is increased and no disturbing graphics are displayed. Although not shown, the color may be changed into red, for instance, to highlight the warning nature of the message.

A block diagram of a system for controlling the multiplicity of displays 2-4 dependent on the gaze direction of the driver 6 is shown in Figure 7. A head unit 17 may include a processor 18 or an array of processors, also referred to as processor 18 in the following description. The processor 18 and, consequently, the head unit 17 are associated with the three displays 2-4 and gaze detector 19 that includes the cameras 5 and 12 shown in Figure 1. The head unit 17 with processor 18 may be linked to a time keeper 20 (which may alternatively be integrated in the head unit 17) and to various sensors that may be present in the vehicle, such as a speed sensor 21, a collision sensor 22, an object recognition sensor, a blindspot sensor and/or a lane tracking sensor 23. Furthermore, the head unit 17 may include or be linked to an audio system that comprises at least one loudspeaker 24 for reproducing acoustic messages and warning sounds.

As previously mentioned, the vehicle 1 further includes the gaze detector 19 that is operatively disposed inside the vehicle interior. In an example, the gaze detector 19 may include an eye-tracking device that is configured to monitor an eye position of the vehicle driver while the vehicle 1 is in operation. For instance, the gaze detector 19 may be used to measure the driver's eye position (e.g., the point of gaze) and/or the movement of the driver's eyes (e.g., the motion of the eyes relative to the driver's head). This may be accomplished by utilizing a facial imaging camera 5 (and/or 12), which may be placed inside the vehicle interior in any position that is in front of (either directly or peripherally) the vehicle driver. Example positions for the facial imaging camera 5 include on the rearview mirror (as shown in Figure 1), on the dashboard, on the mounting stem of the steering wheel, or the like. The camera 5 is configured to take images or videos of the vehicle driver's face while driving, and the gaze detector 19 is further configured to extract the driver's eye position from the images/videos. In another example, the movement of the driver's eyes is determined by light (such as infrared light) reflected from the cornea of the eye, which is sensed by a suitable electronic device (which can be part of the gaze detector 19) or an optical sensor (not shown in Figure 1). The information pertaining to the eye motion may then be utilized (e.g., by processor 18, shown in Figure 7, associated with the eye gaze detector 19, or an additional processor) to determine the rotation of the driver's eyes based on changes in the reflected light.

The processor 18 associated with the gaze detector 19 executes computer program code encoded on a computer readable medium which directs the gaze detector 19 to monitor the eye position of the vehicle driver while he/she is driving. Upon determining that the driver's eye position has changed, the gaze detector 19, via the processor 18, is configured to determine the direction in which the driver's eyes are now focused. If, for example, the vehicle driver's eye position is such that his/her eyes are focused on one of the displays 2-4, the gaze detector 19 is configured to send a signal to the head unit 17 indicating that the driver's eyes are focused on or in the direction of a particular one of the displays 2-4.

It is to be understood that the gaze detector 19 may continue to monitor the eye position of the driver's eyes so that the gaze detector 19 can also determine when the driver's eyes are focused/directed away from the display (for example, back on the road). When this occurs, the gaze detector 19 is further configured to send another signal to, for example, head unit 17 indicating that the driver's eyes are no longer focused on the closest display but rather are focused in a forward direction. In response to receiving this signal, the head unit 17 can initiate another signal for the closest display to resume its original (usual) functionality.

In another example, the gaze detector 19 may include a facial imaging device. This device also uses an imaging or video camera (such as the camera 5 or 12 shown in Figure 1) to take images/videos of the driver's face while he/she is operating the vehicle 1. The processor 18 associated with the facial imaging device uses the images/videos to determine that the driver's current line-of-sight is based, at least in part, on the facial position of the driver. The facial position may be determined, for example, by detecting the angle at which the driver's head is positioned in vertical and horizontal directions.

Similar to the eye-tracking device described above, the facial imaging device also uses an associated processor (e.g., processor 18) that executes an application/computer readable code. The application commands the device to monitor the facial position of the vehicle driver while the vehicle is in operation. This information is ultimately used to trigger the altering of the functionality of the closest display, in a manner similar to that previously described when the gaze detector 19 used is an eye-tracking device. The vehicle 1 may be considered to be in operation after the driver physically enters the interior of the vehicle 1 and physically activates the vehicle ignition system and is able to control the speed of the vehicle 1 to increase speed.

As soon as the vehicle 1 is in operation and the vehicle 1 has reached a predefined minimum threshold speed, the gaze detector 19 is activated so that the head unit 17 can monitor the vehicle driver. Since an eye-tracking device is used in this example, the eye position of the driver is monitored. If the gaze detector 19 is a facial imaging camera, the facial position of the vehicle driver may be monitored instead or additionally. Activation of the gaze detector 19 may occur, for example, when the vehicle 1 exceeds any predefined, calibratable minimum speed, such as 3 km/h, 5 km/h, or the like. It is to be understood that any vehicle speed may be set as the minimal threshold speed for activating the gaze detector 19.

The gaze detector 19 may remain activated as long as the vehicle 1 is in operation and, in some instances, as long as the vehicle speed exceeds the predefined minimum threshold value. In instances where the vehicle is actually turned off (e.g., the ignition key is actually removed from the ignition slot), the gaze detector 19 will turn off as well. However, in instances where the vehicle 1 is stopped (e.g., at a traffic light), or is travelling at a speed below a predefined vehicle speed (i.e., the minimum threshold value mentioned above), or the transmission system is changed into a park mode, but the vehicle 1 has not been turned off, the gaze detector 19 may remain in the monitoring mode or may go into a sleep mode. The gaze detector 19 may remain in the sleep mode until i) the vehicle 1 starts moving and exceeds the predefined speed, or ii) the vehicle 1 is turned off. In some cases, if the vehicle 1 speed remains below the minimum threshold value for a predefined amount of time (e.g., 30 seconds, 1 minute, etc.), the gaze detector 19 may automatically shut off. In other instances, once the gaze detector 19 is activated, it may remain in an on state until the vehicle 1 is powered off.

Once the gaze detector 19 has been activated and as long as it remains activated (e.g., not in sleep mode), an eye position of the vehicle driver is continuously monitored via the gaze detector 19. The monitoring of the eye position of the vehicle driver includes determining the direction in which the vehicle driver's eyes are pointed while he/she is operating the vehicle 1. In one example, the monitoring is accomplished by taking a plurality of still images or a video of the vehicle driver's face using the imaging device (such as, e.g., the camera 5 or 12) associated with the gaze detector 19. It is noted that the camera 5 (or 12) may be directly attached to the gaze detector 19, or the camera 12 (or 5) may be remotely located from the gaze detector 19. In this latter instance, the camera 12 may be placed in a position inside the vehicle interior that is in front of the vehicle driver (e.g., in order to take images/video of the driver's face), and the gaze detector 19 may be located elsewhere, such as next to or part of the head unit 17. The cameras 5 and 12 may therefore be in operative communication with the gaze detector 19.

The processor 18 associated with the gaze detector 19 extracts the position of the driver's eyes from the images/videos taken by the camera 5 (and/or 12), and compares the extracted eye position with a previously determined eye position. The eye position may be extracted, for instance, by using contrast to locate the center of the pupil and then using infrared (IR) non-collimated light to create a corneal reflection. The vector between these two features may be used to compute a gaze intersection point with a surface after calibration for a particular person. This previously determined eye position is the direction that the vehicle driver's eyes would have to be pointed towards for the processor 18 to conclude that the vehicle driver's eyes are focused on an object (e.g., the closest display) disposed inside the vehicle interior.

In an example, the processor 18 of the gaze detector 19 determines that the eye position of the driver is directed toward the closest display by comparing the driver's current eye position to a range constructed around the center of the respective display. If the eye position falls within this range, the processor 18 concludes that the driver is in fact looking at this display. Upon making this conclusion, the gaze detector 19 monitors the amount of time that the driver's eye position is focused on the display. In instances where the amount of time exceeds a predefined threshold (e.g., 1.5 seconds, 2 seconds, etc.), in one example, the gaze detector 19 sends a signal to the head unit 17 indicating that the vehicle driver's eyes are focused on the display. In response to this signal, the head unit 14 sends a signal to this display to automatically alter its functionality.

The predefined amount of time that the driver's eye position is directed toward the display (also referred to herein as the glance time) may be established as a preset value based, at least in part, on standard driving conditions and/or environmental conditions. For instance, the predefined amount of time may be a default setting, which may be applied for any conditions that appear to be standard driving conditions (e.g., a single passenger is present in the vehicle 1) and/or environmental conditions (e.g., city travel with a nominal amount of traffic). This default setting may be adjusted based, at least in part, on the vehicle speed. Furthermore, the head unit 17 may determine whether or not the vehicle 1 is traveling at a speed exceeding a predefined higher speed threshold described above. If the higher speed threshold is exceeded, then the head unit 17 sends a signal to the closest display to automatically alter its functionality.

As previously mentioned, the head unit 17 initiates the altering of the functionality of the closest display. In an example, the functionality of the closest display that is altered is how the content is displayed on the display screen. In some instances, any content being shown on the display screen (such as, e.g., a navigation route, radio station and song information, etc.) automatically fades or blacks out, leaving behind a blank or black screen. In another example, the content being shown on the display screen is simplified so that the driver is presented only with pertinent and/or urgent content on the display screen.

Upon altering the content shown on the closest display (e.g., via fading out or simplifying the content), a message may appear on the display screen, where such message is directed to the vehicle driver, and relates to the task of driving. For instance, the message may be a textual message that appears on the blank/black screen (in instances where the content was faded out) or over the simplified content (which becomes a background when the content is simplified). The textual message may relate to the task of driving. In other instances, the message may be a pictorial message that appears on the blank/black screen or over the simplified content. The pictorial message may take the form of an icon, picture, symbol, or the like that relates to the task of driving. The message to the driver may also be a combination of a textual message and a pictorial message. After altering the displaying of the content on the display screen, a textual message and/or a pictorial message may be displayed on the screen.

In still another example, when the content shown on the closest display is altered, an audible message may be played to the vehicle driver via the in-vehicle audio system. This audible message may be a previously recorded message or an automated message that includes, in some form, driving related information. The audible message alone may be played to the vehicle driver upon altering the functionality of the closest display, or the audible message may be played in addition to displaying a textual and/or pictorial message on the display screen.

The audio component must be powered on so that the audible message can be played to the vehicle driver via the speaker 24. In instances where the audio component is powered on and other audible content (e.g., music, a literary work, etc.) is being played on the audio component, the content being played will fade out prior to playing the message to the vehicle driver. In some cases, the previously played content will fade back in as soon as the message is played, while in other cases the previously played content will not fade back in until the driver refocuses his/her eyes/face in a forward direction (e.g., back toward the road). In this example, the audible message may be repeatedly played to the driver until the driver refocuses his/her eyes/face away from the currently watched display.

After the functionality of the closest display has been altered (and possibly a message displayed and/or played to the driver), the eye position of the driver's eyes are further monitored by the gaze detector 19, at least until the processor 18 associated with the gaze detector 19 recognizes that the eye position is such that the driver's eyes are focused away from the previously watched display. An example of this is shown in Figure 1, where the solid line arrow 7 pointed from the driver's eyes to the windshield indicates the direction in which the driver's eyes are pointing after focusing his/her eyes/face away from the object. Upon making this recognition, the gaze detector 19 sends another signal to the head unit 17, and the head unit 17 in turn sends another signal to the previously watched display with instruction for the display to change back to its original functionality. For instance, if the content shown on the display screen was faded out, upon determining that the driver's eyes are or face is away from the previously watched display, the content previously shown on the screen fades back in. Likewise, if the content was simplified, upon making the determination that the driver's focus is away from the display, a complete set of the content is re-displayed and/or is viewable by the vehicle driver. The content displayed on the screen after functionality has been restored may or may not be the same content that was displayed when the functionality was altered.

When the eye position of the vehicle driver is such that the driver's focus is away from all displays 2-4, the driver's focus may be anywhere except for toward the displays 2-4. The message displayed on the closest display screen and/or played over the audio component directs the driver's eyes or face to a position other than toward the display. In the examples provided herein, the message relates to the task of driving. Accordingly, in an example, the gaze detector 19 determines that the driver's eyes are away from all of the displays 2-4 when the driver's eye position is directed forward.

The changing of the altered functionality of the closest display back into its original functionality may be accomplished upon detecting, via the gaze detector 19, that the vehicle driver's eye position is focused away from the closest display. This may be accomplished immediately upon making the detection, or after the gaze detector 19 has determined that the driver's eye position has been focused away from the closest display for at least a predefined amount of time. In this latter example, the predefined amount of time that the driver's focus may be turned away from the display 80 to have its functionality changed back may be 1.5 seconds, 2 seconds, or any preset value. In one particular example, the functionality of the closest display is restored when the gaze detector 19 determines that the driver's eyes are focused back on the road. The amount of time that the driver's eye position is away from the closest display, as previously described in conjunction with determining the amount of time for which the driver's eyes are focused on the closest display, may also be determined, at least in part, from the vehicle speed.

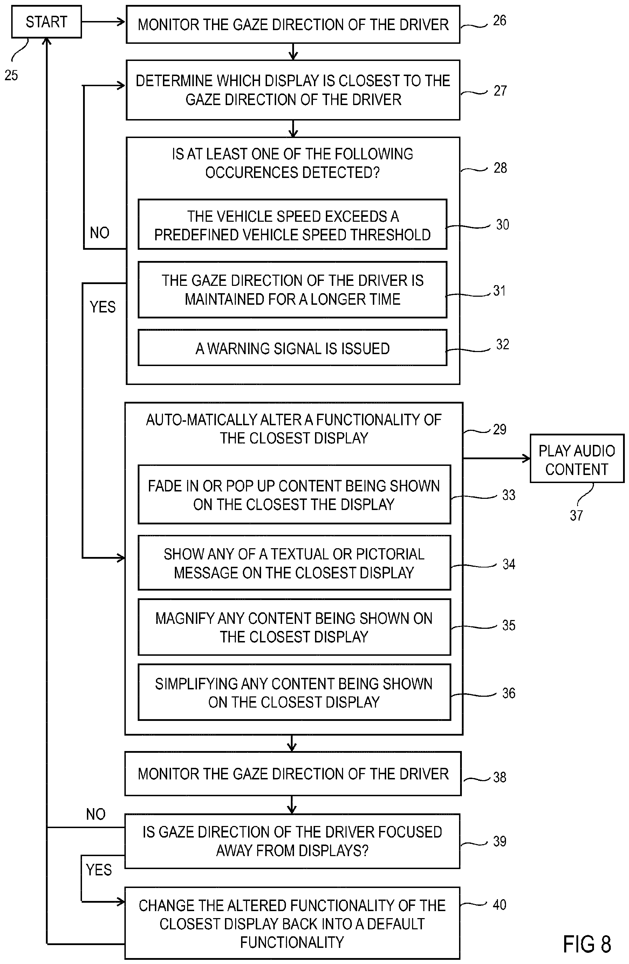

Referring to Figure 8, an exemplary method for controlling a human machine interface disposed in a vehicle and having at least two displays includes, after conducting a starting routine as described above (procedure 25), monitoring the gaze direction of the vehicle driver (procedure 26). Based on the monitoring, it is determined which of the at least two displays is closest to the gaze direction of the vehicle driver (procedure 27) and, in response to the determining, a functionality of the closest of the at least two displays automatically is altered (procedure 28). In the present example, altering the functionality of the closest of the at least two displays is disabled (procedure 29) unless at least one of the following occurrences is detected: i) the vehicle speed exceeds a predefined (higher) vehicle speed threshold (sub-procedure 30), ii) the gaze direction of the vehicle driver is maintained for at least a predefined amount of time; (sub-procedure 31) and iii) a warning signal is issued by a driver assistant system or a vehicle control system (sub-procedure 32). The predefined amount of time may be based on the vehicle speed. Automatically altering the functionality of the closest of the at least two displays includes at least one of: i) fading in or popping up content being shown on the closest of the at least two displays (sub-procedure 33); ii) showing any of a textual or pictorial message on the closest of the at least two displays (sub-procedure 34); iii) magnifying any content being shown on the closest of the at least two displays (sub-procedure 35); and iv) simplifying any content being shown on the closest of the at least two displays (sub-procedure 36). Further an audible message through an audio system operatively disposed in the vehicle may be played (procedure 37), wherein the audible message may include an instruction for the vehicle driver. After automatically altering the functionality of the closest of the at least two displays, the gaze direction of the vehicle driver may be further monitored (procedure 38). Based on the further monitoring, that/whether the gaze direction of the vehicle driver is focused away from the at least two displays may be determined (procedure 39). In response to the determining that the gaze direction of the vehicle driver is focused away from the at least two displays, changing the altered functionality of the closest of the at least two displays back into a default functionality (procedure 40).

While various embodiments of the invention have been described, it will be apparent to those of ordinary skill in the art that many more embodiments and implementations are possible within the scope of the invention.

## Claims

1. A method configured to control a human machine interface disposed in a vehicle (1) and having at least two displays (2, 3, 4), the method comprising:
monitoring a gaze direction of a vehicle driver (6);
based on the monitoring, determining which of the at least two displays (2, 3, 4) is closest to the gaze direction of the vehicle driver (6); and
in response to the determining, automatically altering a functionality of the closest of the at least two displays (2, 3, 4),
**characterised in that**
altering the functionality of the closest of the at least two displays (2, 3, 4) is disabled unless at least one of the following occurrences is detected:
the gaze direction of the vehicle driver (6) is maintained for at least a predefined amount of time, wherein the predefined amount of time is based on the vehicle speed,
a warning signal is issued by a driver assistant system or a vehicle control system.

2. The method of claim 1, wherein monitoring the gaze direction comprises determining at least one of an eye position or a facial position of the vehicle driver (6).

3. The method of any of claims 1-2, wherein automatically altering the functionality of the closest of the at least two displays (2, 3, 4) includes at least one of:
fading in or popping up content being shown on the closest of the at least two displays (2, 3, 4);
showing any of a textual or pictorial message on the closest of the at least two displays (2, 3, 4);
magnifying any content being shown on the closest of the at least two displays (2, 3, 4);
simplifying any content being shown on the closest of the at least two displays (2, 3, 4);
changing at least one of alert level, sensitivity timing and alert timing of a driver assistant system or a vehicle control system so that a reaction time increase for the driver (6) is achieved.

4. The method of any of claims 1-3, further comprising playing an audible message through an audio system operatively disposed in the vehicle (1), the audible message including an instruction for the vehicle driver (6).

5. The method of any of claims 1-4, further comprising:
after automatically altering the functionality of the closest of the at least two displays (2, 3, 4), further monitoring the gaze direction of the vehicle driver (6);
based on the further monitoring, determining that the gaze direction of the vehicle driver (6) is focused away from the closest of the at least two displays (2, 3, 4); and
in response to the determining that the gaze direction of the vehicle driver (6) is focused away from the at least two displays (2, 3, 4), changing the altered functionality of the at least two displays (2, 3, 4) back into a default functionality.

6. The method of any of claims 1-5, further comprising:
based on the monitoring, determining at least one of a time period during which the driver (6) is not looking at the street or lane while driving and determining if the driver (6) is looking into one of the rear-view mirrors.

7. A system configured to control a human machine interface disposed in a vehicle (1) and having at least two displays (2, 3, 4), the system comprising:
a gaze-tracking device operatively disposed in a vehicle (1), the gaze-tracking device configured to monitor a gaze direction of a vehicle driver (6) while the vehicle (1) is in operation; and
a processor (18) operatively associated with the gaze-tracking device and the at least two displays (2, 3, 4), the processor (18) configured to, based on the monitoring, determine which of the at least two displays (2, 3, 4) is closest to the gaze direction of the vehicle driver (6), and configured to, in response to the determining, automatically alter a functionality of the closest of the at least two displays (2, 3, 4),
wherein the processor (18) is configured to evaluate at least one of a vehicle speed, a timer signal and a warning signal,
**characterised in that**
altering the functionality of the closest of the at least two displays (2, 3, 4) is disabled unless at least one of the following occurrences is detected:
the gaze direction of the vehicle driver (6) is maintained for at least a predefined amount of time, wherein the predefined amount of time is based on the vehicle speed;
a warning signal is issued by a driver assistant system or a vehicle control system.

8. The system of claim 7, wherein the gaze-tracking device is further configured to determine at least one of an eye position or a facial position of the vehicle driver (6) to monitor the gaze direction.

9. The system of any of claims 7-8 wherein automatically altering the functionality of the closest of the at least two displays (2, 3, 4) includes at least one of:
fading in or popping up content being shown on the closest of the at least two displays (2, 3, 4);
showing any of a textual or pictorial message on the closest of the at least two displays (2, 3, 4);
magnifying any content being shown on the closest of the at least two displays (2, 3, 4);
simplifying any content being shown on the closest of the at least two displays (2, 3, 4).

10. The system of any of claims 7-9, further comprising an audio system operatively disposed in the vehicle (1) and configured to play an audible message, the audible message including an instruction for the vehicle driver (6).

11. The system of any of claims 7-10, wherein the processor (18) is further configured to:
after automatically altering the functionality of the closest of the at least two displays (2, 3, 4), further monitor the gaze direction of the vehicle driver (6);
based on the further monitoring, determine that the gaze direction of the vehicle driver (6) is focused away from the at least two displays (2, 3, 4); and
in response to the determining that the gaze direction of the vehicle driver (6) is focused away from the at least two displays (2, 3, 4), change the altered functionality of the closest of the at least two displays (2, 3, 4) back into a default functionality.

## Patentansprüche

1. Verfahren, das dazu konfiguriert ist, eine Mensch-Maschine-Schnittstelle, die in einem Fahrzeug (1) angebracht ist und mindestens zwei Anzeigen (2, 3, 4) aufweist, zu steuern, das Verfahren Folgendes umfassend:
Überwachen einer Blickrichtung eines Fahrzeugführers (6);
basierend auf dem Überwachen, Bestimmen welche der mindestens zwei Anzeigen (2, 3, 4) am nächsten zu der Blickrichtung des Fahrzeugführers (6) liegt; und
als Reaktion auf das Bestimmen, automatisches Ändern einer Funktion der nächsten der mindestens zwei Anzeigen (2, 3, 4),
**dadurch gekennzeichnet, dass**
das Ändern der Funktion der nächsten der mindestens zwei Anzeigen (2, 3, 4) deaktiviert ist, sofern nicht mindestens eines der folgenden Vorkommnisse erkannt wird:
die Blickrichtung des Fahrzeugführers (6) wird für mindestens eine vorbestimmte Zeitspanne beibehalten, wobei die vorbestimmte Zeitspanne auf der Fahrzeuggeschwindigkeit basiert,
ein Warnsignal wird durch ein Fahrerassistenzsystem oder ein Fahrzeugsteuersystem ausgegeben.

2. Verfahren nach Anspruch 1, wobei das Überwachen der Blickrichtung das Bestimmen mindestens eines von einer Augenposition oder einer Gesichtsposition des Fahrzeugführers (6) umfasst.

3. Verfahren nach einem der Ansprüche 1-2, wobei das automatische Ändern der Funktion der nächsten der mindestens zwei Anzeigen (2, 3, 4) mindestens einen der folgenden Punkte beinhaltet:
Einblenden oder Auftauchen von Inhalt, der auf der nächsten der mindestens zwei Anzeigen (2, 3, 4) angezeigt wird;
Anzeigen einer beliebigen von einer Textnachricht oder einer Bildnachricht auf der nächsten der mindestens zwei Anzeigen (2, 3, 4);
Vergrößern jedes Inhalts, der auf der nächsten der mindestens zwei Anzeigen (2, 3, 4) angezeigt wird;
Vereinfachen jedes Inhalts, der auf der nächsten der mindestens zwei Anzeigen (2, 3, 4) angezeigt wird;
Ändern mindestens eines von der Warnstufe, dem Sensitivitätstiming und dem Warntiming eines Fahrerassistenzsystems oder Fahrzeugsteuersystems derart, sodass eine Erhöhung der Reaktionszeit des Fahrzeugführers(6) erreicht wird.

4. Verfahren nach einem der Ansprüche 1-3, ferner das Abspielen einer Audionachricht durch ein Audiosystem umfassend, das betriebsmäßig in dem Fahrzeug (1) angeordnet ist, wobei die Audionachricht eine Anweisung für den Fahrzeugführer (6) beinhaltet.

5. Verfahren nach einem der Ansprüche 1-4, ferner Folgendes umfassend:
weiteres Überwachen der Blickrichtung des Fahrzeugführers (6) nach dem automatischen Ändern der Funktion der nächsten der mindestens zwei Anzeigen (2, 3, 4);
Bestimmen, das die Blickrichtung des Fahrzeugführers (6) von der nächsten der mindestens zwei Anzeigen (2, 3, 4) weg fokussiert ist, basierend auf dem weiteren Überwachen; und
als Reaktion auf das Bestimmen, das die Blickrichtung des Fahrzeugführers (6) von der nächsten der mindestens zwei Anzeigen (2, 3, 4) weg fokussiert ist, Wechseln der geänderten Funktion der mindestens zwei Anzeigen (2, 3, 4) zurück in eine Standardfunktion.

6. Verfahren nach einem der Ansprüche 1-5, ferner Folgendes umfassend:
basierend auf dem Überwachen, Bestimmen mindestens eines von einer Zeitspanne, während welcher der Fahrzeugführer (6) während des Fahrens nicht auf die Straße oder Spur schaut, und Bestimmen, ob der Fahrzeugführer (6) in einen der Rückspiegel schaut.

7. System, das dazu konfiguriert ist, eine Mensch-Maschine-Schnittstelle, die in einem Fahrzeug (1) angebracht ist und mindestens zwei Anzeigen (2, 3, 4) aufweist, zu steuern, das System Folgendes umfassend:
eine Blickverfolgungsvorrichtung, die betriebsmäßig in einem Fahrzeug (1) angeordnet ist, wobei die Blickverfolgungsvorrichtung dazu konfiguriert ist, eine Blickrichtung eines Fahrzeugführers (6) zu überwachen, während das Fahrzeug (1) in Betrieb ist; und
einen Prozessor (18), der betriebsmäßig der Blickverfolgungsvorrichtung und den mindestens zwei Anzeigen (2, 3, 4) zugeordnet ist, wobei der Prozessor(18) basierend auf dem Überwachen dazu konfiguriert ist, zu bestimmen, welche der beiden Anzeigen (2, 3, 4) am nächsten zu der Blickrichtung des Fahrzeugführers (6) ist, und als Reaktion auf das Bestimmen dazu konfiguriert ist, automatisch eine Funktion der nächsten der mindestens zwei Anzeigen (2, 3, 4) zu ändern,
wobei der Prozessor (18) dazu konfiguriert ist, mindestens eines von einer Fahrzeuggeschwindigkeit, einem Zeitsignal und einem Warnsignal auszuwerten, **dadurch gekennzeichnet, dass**
das Ändern der Funktion der nächsten der mindestens zwei Anzeigen (2, 3, 4) deaktiviert ist, sofern nicht mindestens eines der folgenden Vorkommnisse erkannt wird:
die Blickrichtung des Fahrzeugführers (6) wird für mindestens eine vorbestimmte Zeitspanne beibehalten, wobei die vorbestimmte Zeitspanne auf der Fahrzeuggeschwindigkeit basiert,
ein Warnsignal wird durch ein Fahrerassistenzsystem oder ein Fahrzeugsteuersystem ausgegeben.

8. System nach Anspruch 7, wobei die Blickverfolgungsvorrichtung ferner dazu konfiguriert ist, mindestens eines von einer Augenposition oder einer Gesichtsposition des Fahrzeugführers (6) zu bestimmen, um die Blickrichtung zu überwachen.

9. System nach einem der Ansprüche 7-8, wobei das automatische Ändern der Funktion der nächsten der mindestens zwei Anzeigen (2, 3, 4) mindestens einen der folgenden Punkte beinhaltet:
Einblenden oder Auftauchen von Inhalt, der auf der nächsten der mindestens zwei Anzeigen (2, 3, 4) angezeigt wird;
Anzeigen einer beliebigen von einer Textnachricht oder einer Bildnachricht auf der nächsten der mindestens zwei Anzeigen (2, 3, 4);
Vergrößern jedes Inhalts, der auf der nächsten der mindestens zwei Anzeigen (2, 3, 4) angezeigt wird;
Vereinfachen jedes Inhalts, der auf der nächsten der mindestens zwei Anzeigen (2, 3, 4) angezeigt wird

10. System nach einem der Ansprüche 7-9, ferner ein Audiosystem umfassend, das betriebsmäßig in dem Fahrzeug (1) angeordnet und dazu konfiguriert ist, eine Audionachricht abzuspielen, wobei die Audionachricht eine Anweisung für den Fahrzeugführer (6) beinhaltet.

11. System nach einem der Ansprüche 7-10, wobei der Prozessor (18) ferner zu Folgendem konfiguriert ist:
weiteres Überwachen der Blickrichtung des Fahrzeugführers (6) nach dem automatischen Ändern der Funktion der nächsten der mindestens zwei Anzeigen (2, 3, 4);
Bestimmen, das die Blickrichtung des Fahrzeugführers (6) von der nächsten der mindestens zwei Anzeigen (2, 3, 4) weg fokussiert ist, basierend auf dem weiteren Überwachen; und
als Reaktion auf das Bestimmen, das die Blickrichtung des Fahrzeugführers (6) von der nächsten der mindestens zwei Anzeigen (2, 3, 4) weg fokussiert ist, Wechseln der geänderten Funktion der nächsten der mindestens zwei Anzeigen (2, 3, 4) zurück in eine Standardfunktion.

## Revendications

1. Procédé configuré pour commander une interface homme-machine disposée dans un véhicule (1) et ayant au moins deux dispositifs d'affichage (2, 3, 4), le procédé comprenant :
la surveillance d'une direction du regard d'un conducteur du véhicule (6) ;
sur la base de la surveillance, la détermination duquel au moins deux dispositifs d'affichage (2, 3, 4) est le plus proche de la direction du regard du conducteur du véhicule (6) ; et
en réponse à la détermination, la modification automatique d'une fonctionnalité du plus proche des au moins deux dispositifs d'affichage (2, 3, 4),
**caractérisé en ce que**
la modification de la fonctionnalité du plus proche des au moins deux dispositifs d'affichage (2, 3, 4) est désactivée jusqu'à ce qu'au moins un des événements suivants soit détecté :
la direction du regard du conducteur du véhicule (6) est maintenue pendant au moins une quantité de temps prédéterminée, dans lequel la quantité de temps prédéterminée est basée sur la vitesse du véhicule,
un signal d'avertissement est émis par un système d'assistance à la conduite ou un système de commande de véhicule.

2. Procédé selon la revendication 1, dans lequel la surveillance de la direction du regard comprend la détermination d'au moins l'une d'une position des yeux ou d'une position faciale du conducteur du véhicule (6).

3. Procédé selon l'une quelconque des revendications 1 à 2, dans lequel la modification automatique de la fonctionnalité du plus proche des au moins deux dispositifs d'affichage (2, 3, 4) comprend au moins un parmi :
la disparition ou l'apparition d'un contenu qui est présenté sur le plus proche des au moins deux dispositifs d'affichage (2, 3, 4) ;
la présentation de n'importe quel message textuel ou graphique sur le plus proche des au moins deux dispositifs d'affichage (2, 3, 4) ;
l'agrandissement de n'importe quel contenu qui est présenté sur le plus proche des au moins deux dispositifs d'affichage (2, 3, 4) ;
la simplification de n'importe quel contenu qui est présenté sur le plus proche des au moins deux dispositifs d'affichage (2, 3, 4) ;
le changement d'au moins un parmi un niveau d'alerte, une synchronisation de sensibilité et une synchronisation d'alerte d'un système d'assistance à la conduite ou d'un système de commande de véhicule de manière qu'une augmentation de temps de réaction pour le conducteur (6) soit obtenue.

4. Procédé selon l'une quelconque des revendications 1 à 3, comprenant en outre la reproduction d'un message audible par le biais d'un système audio disposé en fonctionnement dans le véhicule (1), le message audible comprenant une instruction pour le conducteur du véhicule (6).

5. Procédé selon l'une quelconque des revendications 1 à 4, comprenant en outre :
après la modification automatique de la fonctionnalité du plus proche des au moins deux dispositifs d'affichage (2, 3, 4), une autre surveillance de la direction du regard du conducteur du véhicule (6) ;
sur la base de l'autre surveillance, la détermination que la direction du regard du conducteur du véhicule (6) est focalisée loin des au moins deux dispositifs d'affichage (2, 3, 4) ; et
en réponse à la détermination que la direction du regard du conducteur du véhicule (6) est focalisée loin des au moins deux dispositifs d'affichage (2, 3, 4), le changement de la fonctionnalité modifiée des au moins deux dispositifs d'affichage (2, 3, 4) à nouveau dans une fonctionnalité par défaut.

6. Procédé selon l'une quelconque des revendications 1 à 5, comprenant en outre :
sur la base de la surveillance, la détermination qu'au moins une période de temps durant laquelle le conducteur (6) ne regarde pas la route ou la voie tout en conduisant et le fait de déterminer si le conducteur (6) regarde dans un des rétroviseurs.

7. Système configuré pour commander une interface homme-machine disposée dans un véhicule (1) et ayant au moins deux dispositifs d'affichage (2, 3, 4), le système comprenant :
un dispositif de suivi du regard disposé en fonctionnement dans un véhicule (1), le dispositif de suivi du regard étant configuré pour surveiller une direction du regard d'un conducteur du véhicule (6) alors que le véhicule (1) est en fonctionnement ; et
un processeur (18) associé en fonctionnement au dispositif de suivi du regard et à l'au moins deux dispositifs d'affichage (2, 3, 4), le processeur (18) étant configuré pour, sur la base de la surveillance, déterminer lequel des au moins deux dispositifs d'affichage (2, 3, 4) est le plus proche de la direction du regard du conducteur du véhicule (6), et configuré pour, en réponse à la détermination, modifier automatiquement une fonctionnalité du plus proche des au moins deux dispositifs d'affichage (2, 3, 4),
dans lequel le processeur (18) est configuré pour évaluer au moins un parmi une vitesse du véhicule, un signal de temporisateur et un signal d'avertissement,
**caractérisé en ce que**
la modification de la fonctionnalité du plus proche des au moins deux dispositifs d'affichage (2, 3, 4) est désactivée jusqu'à ce qu'au moins un des événements suivants soit détecté :
la direction du regard du conducteur du véhicule (6) est maintenue pendant au moins une quantité de temps prédéterminée, dans lequel la quantité de temps prédéterminée est basée sur la vitesse du véhicule ;
un signal d'avertissement est émis par un système d'assistance à la conduite ou un système de commande de véhicule.

8. Système selon la revendication 7, dans lequel le dispositif de suivi du regard est configuré en outre pour déterminer au moins l'une d'une position des yeux ou d'une position faciale du conducteur du véhicule (6) pour surveiller la direction du regard.

9. Système selon l'une quelconque des revendications 7 à 8, dans lequel la modification automatique de la fonctionnalité du plus proche des au moins deux dispositifs d'affichage (2, 3, 4) comprend au moins un parmi :
la disparition ou l'apparition d'un contenu qui est présenté sur le plus proche des au moins deux dispositifs d'affichage (2, 3, 4) ;
la présentation de n'importe quel message textuel ou graphique sur le plus proche des au moins deux dispositifs d'affichage (2, 3, 4) ;
l'agrandissement de n'importe quel contenu qui est présenté sur le plus proche des au moins deux dispositifs d'affichage (2, 3, 4) ;
la simplification de n'importe quel contenu qui est présenté sur le plus proche des au moins deux dispositifs d'affichage (2, 3, 4) .

10. Système selon l'une quelconque des revendications 7 à 9, comprenant en outre un système audio disposé en fonctionnement dans le véhicule (1) et configuré pour reproduire un message audible, le message audible comprenant une instruction pour le conducteur du véhicule (6).

11. Système selon l'une quelconque des revendications 7 à 10, dans lequel le processeur (18) est configuré en outre pour :
après la modification automatique de la fonctionnalité du plus proche des au moins deux dispositifs d'affichage (2, 3, 4), surveiller ultérieurement la direction du regard du conducteur du véhicule (6) ;
sur la base de la surveillance ultérieure, déterminer que la direction du regard du conducteur du véhicule (6) est focalisée loin des au moins deux dispositifs d'affichage (2, 3, 4) ; et
en réponse à la détermination que la direction du regard du conducteur du véhicule (6) est focalisée loin des au moins deux dispositifs d'affichage (2, 3, 4), le changement de la fonctionnalité modifiée du plus proche des au moins deux dispositifs d'affichage (2, 3, 4) à nouveau dans une fonctionnalité par défaut.
